# EUROPEAN PATENT APPLICATION

(11) **EP 1 213 165 A2**
(43) Date of publication of application: **12.06.2002**
(21) Application number: 01129006.1
(22) Date of filing: 06.12.2001
(51) Int. Cl.: B60H 1/00, B60K 37/00, G05G 1/00

(54) **Operation switch unit for vehicle**

(30) Priority: 06.12.2000 JP 2000371346
(71) Applicant: Kabushiki Kaisha Tokai Rika Denki Seisakusho, Niwa-gun, Aichi (JP)
(72) Inventor: Ogawa, Satoshi, K.K. Tokai Rika Denki Seisakusho, Niwa-gu, Aichi (JP); Aoki, Yoshiyuki, K.K. Tokai Rika Denki Seisakusho, Niwa-gu, Aichi (JP)
(74) Representative: Grünecker, Kinkeldey, Stockmair & Schwanhäusser Anwaltssozietät

(57) **Abstract**

A rotating knob (60) is provided on a decorative panel (12) of a controller unit (11) in such a way as to be able to rotate around a shaft center (O1). Three guideholes (56 to 58) are provided along the same virtual circle drawn around the shaft center (O1). Sliding knobs (61 to 63) are respectively provided in the guide holes (56 to 68) in such a manner as to perform a sliding operation.

## Description

### BACKGROUND OF THE INVENTION

The present invention relates to a vehicular operation-switch unit for use in, for example, a vehicle.

Hitherto, vehicles, especially, automobiles, each has a vehicular operation switch unit (hereunder referred to as a controller unit) for air-conditioning of the vehicle.

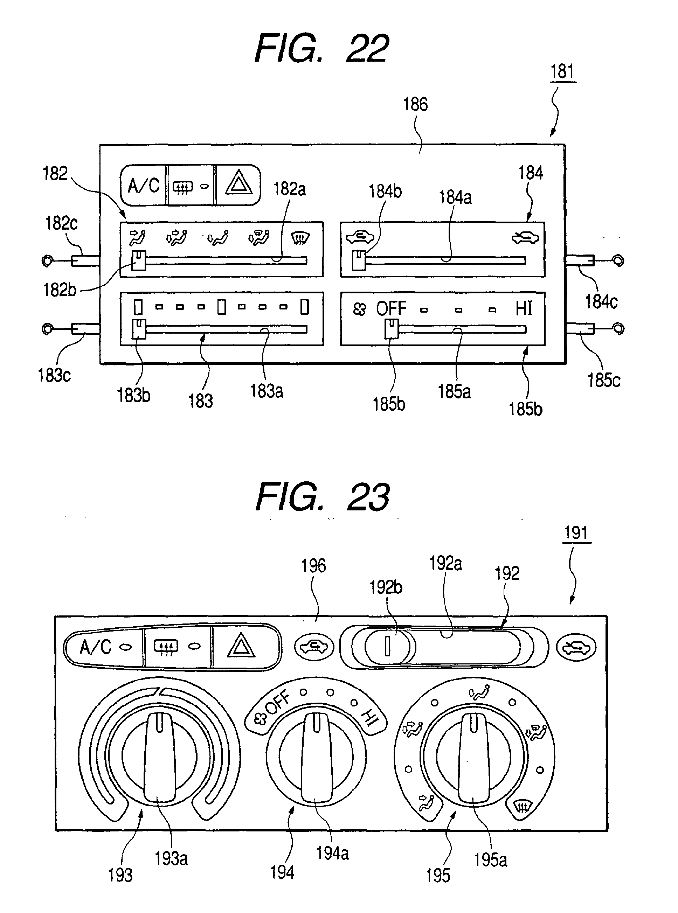

One such controller unit is illustrated in FIG. 22. This controller unit 181 has four sliding knob mechanisms 182, 183, 184, and 185. Each of the sliding knob mechanisms 182, 183, 184, and 185 has a corresponding one of laterally elongated guide holes 182a, 183a, 184a, and 185a provided in a decorative surface portion 186 of the controller unit 181, and a corresponding one of sliding knobs 182b, 183b, 184b, and 185b enabled to perform sliding movement in the corresponding one of the guide holes 182a to 185a. The portion of the decorative surface portion 186 is exposed in the vehicle.

Each of the sliding knobs 182b to 185b is connected to another mechanism (not shown) through a corresponding one of power transmission cables 182c, 183c, 184c, and 185c. Each of the sliding knob mechanisms 182 to 185 is adapted to cause the corresponding one of the sliding knobs 182b to 185b to slide therein to thereby operate the another mechanism so as to change a wind supply opening, temperature, a choice of whether to take outside air into the vehicle, and an air volume.

Each of the sliding knob mechanism 182 to 185 individually has a moderation mechanism (not shown). Practically, the moderation mechanism has a moderation surface member (not shown) and a moderation member (not shown). The moderation member is press-contacted to the moderation surface member by a pushing member (not shown).

There is a controller unit 191 shown in FIG. 23 other than the controller unit 181. This controller unit 191 has a sliding knob mechanism 192 and rotating knob mechanisms 193, 194, and 195.

The sliding knob mechanism 192 has a laterally elongated guide hole 192a provided in a decorative surface portion 196 of the controller unit 191,and a sliding knob 192b enabled to perform sliding movement in the guide holes 192a. The portion of the decorative surface portion 96 is exposed in the vehicle The sliding knob 192b is connected to another mechanism (not shown) through a power transmission cable (not shown). The sliding knob mechanism 192 is adapted to cause the sliding knob 192b to slide therein to thereby operate the another mechanism so as to change a choice of whether to take outside air into the vehicle.

The rotating knob mechanisms 193 to 195 have rotating knobs 193a, 194a, and 195a rotatably provided therein, respectively. The rotating knobs 193a to 195a are disposed on the decorative surface 196. The rotating knob mechanisms 193 to 195 are adapted to cause the corresponding one of the sliding knobs 193a to 195a to turn thereby to change temperature, an air volume, and a wind supply opening.

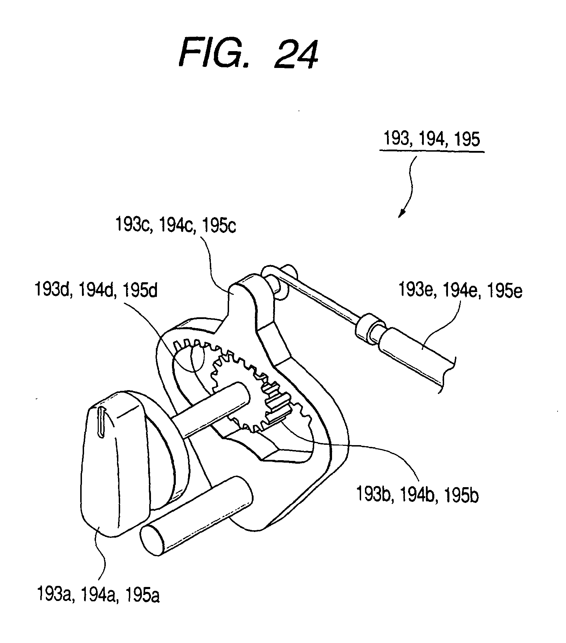

As shown in FIG. 24, each of the rotating knob mechanisms 193 to 195 has a corresponding one of pinion members 193b, 194b, and 195b each adapted to turn according to an amount of turn of a corresponding one of the rotating knobs 193a to 195a, and also has a corresponding one of power conversion members 193c, 194c, and 195c for converting forward and reverse turns to reciprocating motions.

Incidentally, in the present specification, the term "forward turn" designates a clockwise turn. Further, the term "reverse turn" designates a counterclockwise turn.
Each of the power conversion members 193c to 195c is reciprocatingly swingably supported by a support member (not shown) , and has sectorial gear portions 193d, 194d, and 195d respectively meshing with the pinion members 193b to 195b. Each of the arcuate sectorial gear portions 193d to 195d is formed like a circular arc drawn around a rotation supporting point of a corresponding one of the power conversion members 193c to 195c, each of which reciprocatingly swings along a circular arc.

Consequently, a rotational motion of each of the rotating knobs 193a to 195a is transmitted as a reciprocating motion through a corresponding one of the power conversion members 193c to 195c to a corresponding one of power transmission cables 193e, 194e, and 195e respectively connected to the power conversion members 193c to 195c.

However, in the case of the controller unit 181, the sliding knob mechanisms 182 to 185 are separately placed on the decorative surface 186. Therefore, it is necessary that the area of the decorative surface 186 is large so as to dispose the sliding knobs 182b to 185b thereon. On the other hand, in the controller unit 191, similarly, the sliding knob mechanism 192, and the rotating knob mechanisms 193 to 195 are separately disposed on the decorative surface 196. Therefore, it is necessary that the area of the decorative surface 186 is large so as to dispose the sliding knobs 192b and the rotating knobs 193a to 195a thereon.

### SUMMARY OF THE INVENTION

Accordingly, the invention is accomplished in view of the aforementioned circumstances, and an object of the invention is to provide a vehicular operation-switch unit enabled to reduce a space, on which changing-operation members are disposed, thereby to decrease the size of the entire unit.

In order to solve the aforesaid object, the invention is characterized by having the following arrangement.
(1) An operation switch unit for vehicle comprising:
   an unit body;
   a turnable changing operation member provided to the unit body so as to be able to perform a turning operation; and
   a slidable changing operation member provided to the unit body so as to be able to perform a sliding operation,
   wherein the slidable changing operation member is placed so as to be able to perform the sliding operation along a circular arc around a center of a turn shaft of the turnable changing operation member provided.
(2) The operation switch unit according to (1), wherein
   a plurality of the slidable changing operation members are provided to the unit body, respectively, and
   the plurality of the slidable changing operation members are placed on a same virtual circle to be drawn around the center of the turn shaft of the turnable changing operation member so as to be able to perform the sliding operation.
(3) The operation switch unit according to (2), wherein
   the plurality of the slidable changing operation members includes a first moderation mechanism for providing a feeling of moderation,
   the first moderation mechanism includes first moderation members provided to the plurality of the slidable changing operation members, respectively, and a first moderation surface member with which the first moderation members is contacted, and
   the first moderation surface member is placed on the virtual circle.
(4) The operation switch unit according to any one of (1) to (3), wherein
   a plurality of the turnable changing operation members are provided to the unit body, respectively,
   centers of turn shafts of at least two of the plurality of the turnable changing operation members coincide with each other.
(5) The operation switch unit according to (4), wherein
   the plurality of the turnable changing operation members include a first changing operation member and a second changing operation member, a second moderation mechanism for providing a feeling of moderation to the first changing operation member, and a third moderation mechanism for providing a feeling of moderation to the second changing operation member,
   the second moderation mechanism includes a second moderation surface member adapted to turn according to an amount of turn of the first changing operation member, and a second moderation member oppositely pressure-contacted with the second moderation surface member,
   the third moderation mechanism includes a third moderation surface member adapted to turn according to an amount of turn of the second changing operating member, and a third moderation member oppositely pressure-contacted with the third moderation surface member, and
   the second moderation member and the third moderation member are pressure-contacted with the second moderation surface member and the third moderation surface member by a common pushing member, respectively.
(6) The operation switch unit according to any one of (1) to (5), further comprising:
   a pinion adapted to turn according to an amount of turn of the turnable changing operation member;
   a rack adapted to perform a reciprocating motion in response to forward and reverse turns of the pinion; and
   a power transmission cable through which the reciprocating motion of the rack is transmitted,
   wherein the rack performs a linearly reciprocating motion.
(7) The operation switch unit according to any one of (1) to (6), wherein
   the turnable changing operation member is one of a changing operation member for changing temperature, a changing operation member for changing an air volume, a changing operation member for changing a wind supply opening, and a changing operation member for taking outside air into the vehicle,
   the slidable changing operation member is one of the changing operation member for changing temperature, the changing operation member for changing an air volume, the changing operation member for changing a wind supply opening, and the changing operation member for taking outside air into the vehicle, except one which the turnable changing operation member is.

According to the invention, the changing operation member enabled to perform a sliding operation is adapted to perform a sliding operation along a circular arc around the center of the turn shaft of the changing operation member enabled to perform a turning operation.

A plurality of changing operation members enabled to perform a sliding operation are adapted to be able to perform a sliding operation along the same virtual circle drawn around the center of the turn shaft of the changing operation member enabled to perform a turning operation, in addition to the operation of the first operation switch unit of the invention.

The following operation is performed in addition to the operation of the second operation switch unit of the invention. That is, a plurality of first moderation members are respectively pressure-contacted with a plurality of first moderation surface members placed on the virtual circle drawn around the center of the turning shaft of the changing operation member enabled to perform a turning operation. Consequently, a plurality of changing operation members placed on the same virtual circle are enabled to provide a feeling of moderation.

The following operation is performed in addition to the operation of one of the first to third operation switch units. That is, a plurality of changing operation members enabled to perform a turning operation are provided so that the centers of the turning shafts thereof coincide with one another. Namely, a plurality of changing operation members enabled to perform a turning operation are provided in such a way as to be placed one upon another.

The following operation is performed in addition to the operation of the fourth operation switch unit of the invention. That is, when the first changing operation member is turned, the second moderation member and the second moderation surface member are pressure-contacted with each other by a pushing member. Thus, the first changing operation member is enabled to provide a feeling of moderation. Further, when the second changing operation member is turned, the third moderation member and the third moderation surface member are pressure-contacted with each other by a pushing member. Thus, the second changing operation member is enabled to provide a feeling of moderation. Furthermore, because a common pushing member is used for pressure-contacting the second moderation member and the second moderation surface member with each other and for pressure-contacting the third mode ration member and the third moderation surface member with each other, the number of parts of the operation switch unit for a vehicle is reduced, as compared with the case that the pushing member for pressure-contacting the second moderation member and the second moderation surface member with each other is provided independent of the pushing member for pressure-contacting the third moderation member and the third moderation surface member with each other.

The following operation is performed in addition to the operation of one of the first to fifth operation switch units of the invention. That is, when the changing operation member enabled to perform a turning operation is turned, the pinion is similarly turned. When the pinion performs forward and reverse turns, the rack performs linearly reciprocating motions. The linearly reciprocating motion of the rack is transmitted to the power transmission cable.

### BRIEF DESCRIPTION OF THE DRAWINGS

FIG. 1 is a front view illustrating a controller unit of a first embodiment.
FIG. 2 is an exploded perspective view illustrating the controller unit of the first embodiment.
FIG. 3 is a partly sectional view taken in the direction of an arrow on line A-A of FIG. 1.
FIG. 4A is a schematic explanatory view illustrating the operation relation between a rotating lever and a cable; and FIG. 4B is an explanatory view illustrating a moderation concave portion of a moderation surface.
FIG. 5 is a partly sectional view taken in the direction of an arrow on line B-B of FIG. 3.
FIG. 6 is a front view illustrating a substrate of the first embodiment.
FIG. 7 is a front view illustrating a controller unit of the second embodiment.
FIG. 8 is an exploded perspective view illustrating the controller unit of the second embodiment.
FIG. 9 is an exploded perspective view illustrating the controller unit of the second embodiment.
FIG. 10 is an exploded perspective view illustrating the controller unit of the second embodiment.
FIG. 11 is a front view illustrating a case body of the second embodiment.
FIG. 12 is a rear view illustrating the case body of the second embodiment.
FIG. 13 is a partly sectional view illustrating the relation between a rotating knob 98 and a rotating member of the second embodiment.
FIG. 14 is a sectional view illustrating the relation among the rotating knob 85, a connection member, and a rotating element of the second embodiment.
FIG. 15A is a rear view illustrating the rotating knob 85 and the connection portion, which is taken in the direction of an arrow on line C-C of FIG. 14; and FIG. 15B is a sectional view taken in the direction of an arrow on line D-D of FIG. 14.
FIG. 16A is a perspective view illustrating a front surface of a reciprocating element 82; and FIG. 16B is a perspective view illustrating a back surface of the reciprocating element 82.
FIG. 17 is a schematic explanatory view illustrating the relation between the reciprocating element and a pinion portion of the second embodiment.
FIG. 18A is a perspective view illustrating a rotating element; and FIG. 18B is a perspective view illustrating a rotating element.
FIG. 19 is a schematic explanatory view illustrating the relation between a moderation ball and a moderation surface of the second embodiment.
FIG. 20 is a schematic explanatory view illustrating the relation between a swinging member and a cable of the second embodiment.
FIG. 21A is a partly perspective view illustrating the relation between the swinging member and the moderation piece; and FIG. 21B is a partly enlarged view illustrating a projection portion and a moderation concave portion.
FIG. 22 is a plan view illustrating a conventional controller unit 181.
FIG. 23 is a plan view illustrating a conventional controller unit 191.
FIG. 24 is a schematic perspective view illustrating a conventional rotating knob mechanism.

### DETAILED DESCRIPTION OF PREFERRED EMBODIMENTS

### First Embodiment

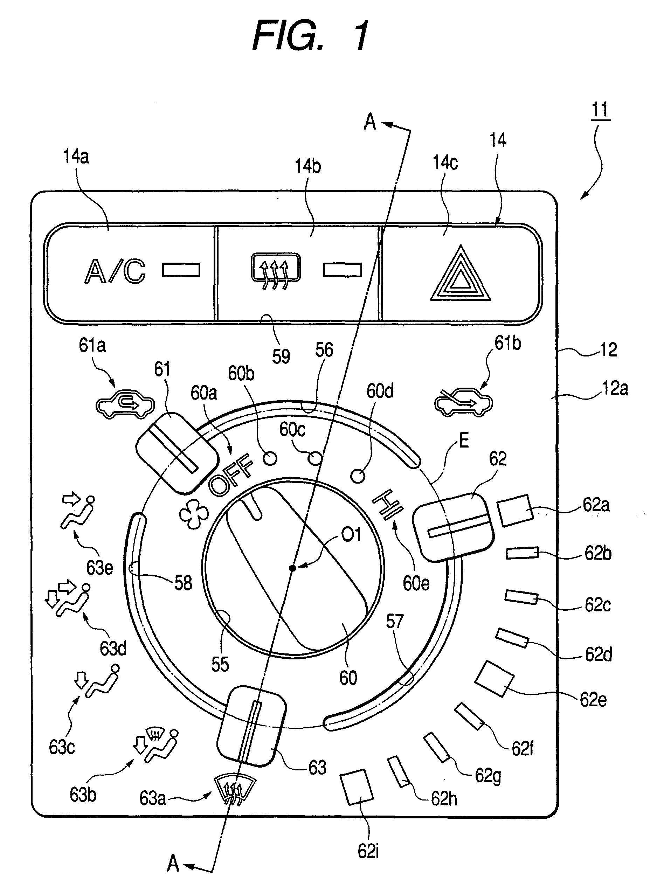

Hereinafter, a first embodiment embodying the invention is described hereinbelow with reference to FIGS. 1 to 6.

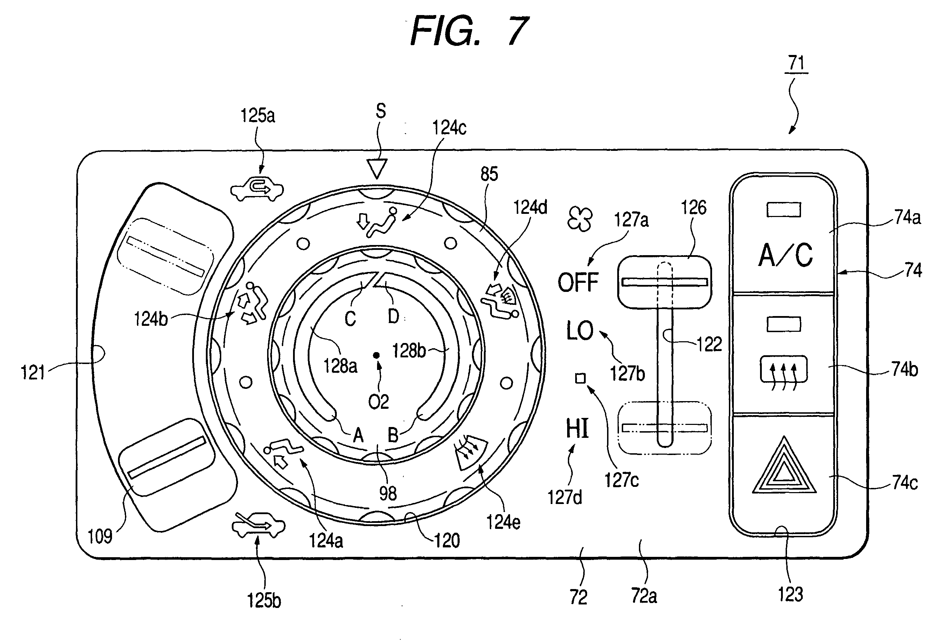

Incidentally, in the present specification, the terms "right-hand side", " left-hand side", "upward side", "downward side", "front side" and "backward side" designate the right-hand side, the left-hand side, the upward side, and the downward side in each of FIGS. 1 and 7 respectively illustrating the first embodiment and a second embodiment, and the upward side perpendicular to paper, on which each of FIGS. 1 and 7 is drawn, and the backward side perpendicular thereto, respectively.

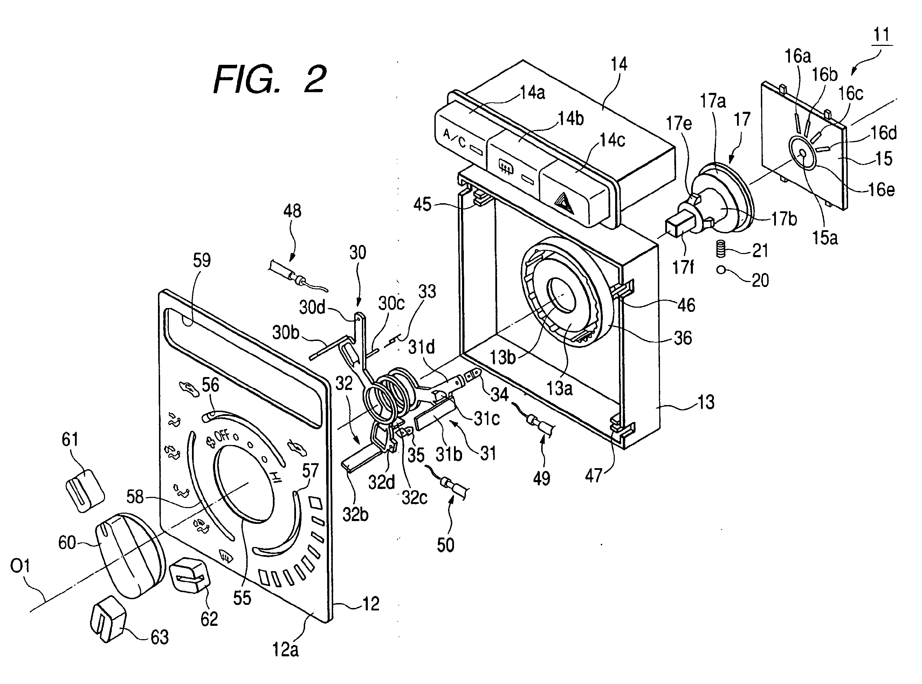

FIG. 1 illustrates a front face of an operation switch unit 11 for a vehicle (hereunder referred to as a controller unit) according to the first embodiment. As shown in FIG. 2, the controller unit 11 has a decorative panel 12, a case body 13, and a switch box 14.

The case body 13 is shaped nearly like a rectangular box, and opened in a front-side face portion thereof. Further, the case body 13 is fixed to a stationary member (not shown) in an instrument panel (not shown) of a vehicle. The backward side wall of the case body 13 is shaped nearly like a square.

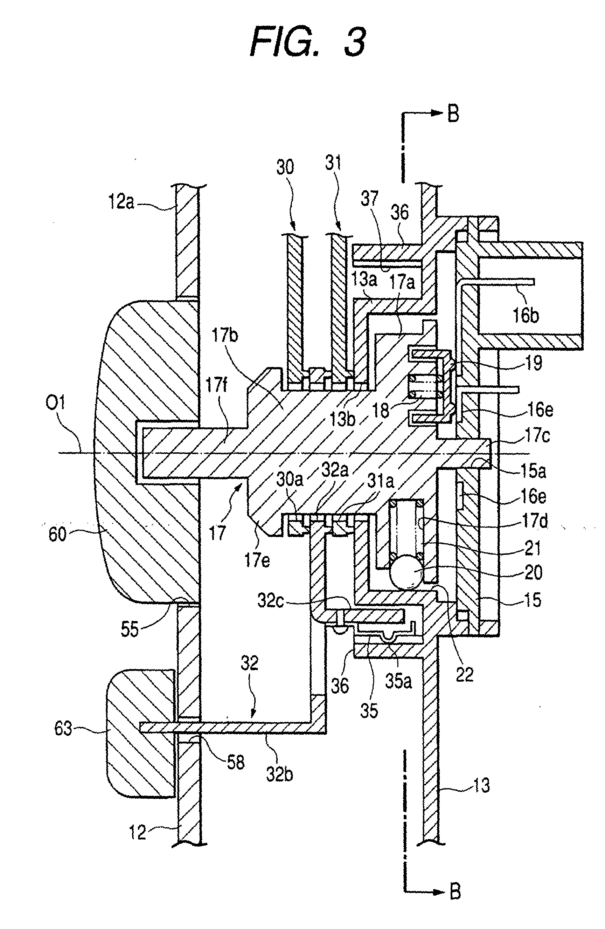

As shown in FIGS. 2 and 3, a covered cylindrical accommodating portion 13a is formed in the backward side wall of the case body 13 by frontwardly pushing out the nearly central portion thereof. A circular through hole 13b is formed in the central part of the accommodating portion 13a.

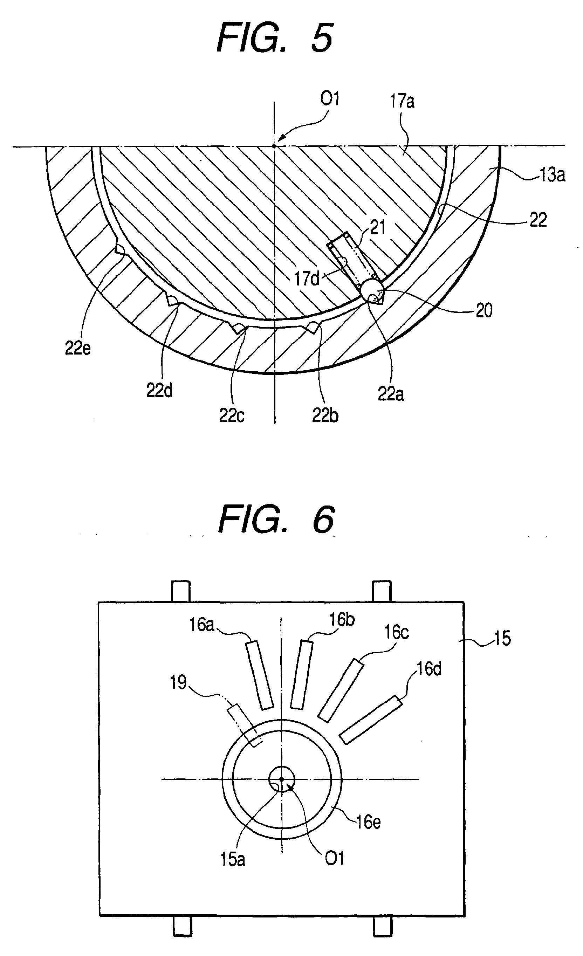

A substrate 15 is fixed to a backward side of the case body 13. A through hole 15a is formed in the nearly central portion of the substrate 15. As shown in FIG. 6, four stationary electrodes 16a, 16b, 16c, and 16d radiating from the through hole 15a are fixed by being angularly spaced at uniform angular intervals. Each of the stationary electrodes 16a, 16b, 16c, and 16d are formed from an electrically conductive metal.

The stationary electrode 16a is disposed in such a way as to extend upwardly and slightly leftwardly from the through hole 15a. The stationary electrodes 16b, 16c, and 16d are arranged in a clockwise direction in this order. The stationary electrode 16d is disposed in such a way as to extend nearly upper-rightwardly from the through hole 15a. As shown in FIG. 3, each of the stationary electrodes 16a to 16d penetrates the substrate 15 and extends in such a way as to have one end thereof placed at the backward side of the substrate 15. Incidentally, FIG. 3 illustrates only the state of the stationary electrode 16d.

Further, a ring-like common electrode 16e is formed on the front side surface of the substrate 15 along the outer periphery of the through hole 15. As illustrated in FIG. 3, the outer-peripheral top portion of the common electrode 16e penetrates the substrate 15 and extends toward the backward side of the substrate 15.

As shown in FIGS. 2 and 3, a turning element 17 is placed between the accommodating portion 13a and the substrate 15. The turning element 17 comprises: a disk portion 17a; shaft portions 17b and 17c, which are coaxial with each other and provided between the front and back surfaces of a disk portion 17a; and an accommodating hole 17d formed in an outer peripheral part of the disk portion 17a.

The shaft portion 17c of the turning element 17 is turnably supported by the through hole 15a of the substrate 15. The shaft portion 17b of the turning element 17 is passed through a through hole 13b of the case body 13. Further, the disk portion 17a of the turning element 17 is accommodated in the accommodating portion 13a of the case body 13.

As shown in FIG. 3, a sliding electrode 19 made of an electrically conductive metal pushed by a spring 18 against the substrate 15 is disposed on the backward side surface of the disk portion 17a of the turning element 17. The sliding electrode 19 is pressure-contacted with the common electrode 16e provided on the front side surface of the substrate 15 at all times. Further, when the turning element 17 turns around the center O1 of the shaft thereof, the sliding electrode 19 is selectively sliding-contacted with one of the stationary electrodes 16a to 16d (see FIG. 6). Incidentally, the center O1 of the shaft corresponds to the center of the turning shaft.

A moderation ball 20 is accommodated in the accommodating hole 17d of the turning element 17 in such a manner as to be able to go therein and thereout. Moreover, a spring 21 for outwardly pushing the moderation ball 20 is accommodated in the accommodating hole 17d. The moderation ball 20 is adapted to be pressure-contacted with the inner peripheral surface of the accommodating portion 13a of the case body 13 at all times. As shown in FIGS. 3 and 5, the inner peripheral surface of the accommodating portion 13a is set as a moderation surface 22. Five moderation concave portions 22a, 22b, 22c, 22d, and 22e are formed in the moderation surface 22. Further, the sliding electrode 19 is adapted to be selectively pressure-contacted with one of the stationary electrodes 16a to 16d (see FIG. 6) when the moderation ball 20 engages with the moderation concave portions 22b to 22e.

As shown in FIGS. 2 and 3, three turning levers 30, 31, and 32 are provided on the outer peripheral part of the shaft portion 17b of the turning element 17. The turning levers 30 to 32 are restricted by a locking claw 17e, which is provided on the outer peripheral part of the shaft portion 17b, from moving frontwardly and rearwardly. Circular through holes 30a, 31a, and 32a are formed in the base end portions of the turning levers 30 to 32, respectively. The through holes 30a to 32a are turnably and externally fitted onto the shaft portion 17b of the turning element 17. Knob attaching portions 30b, 31b, and 32b bent frontwardly are respectively formed on tip end portions of the turning levers 30 to 32.

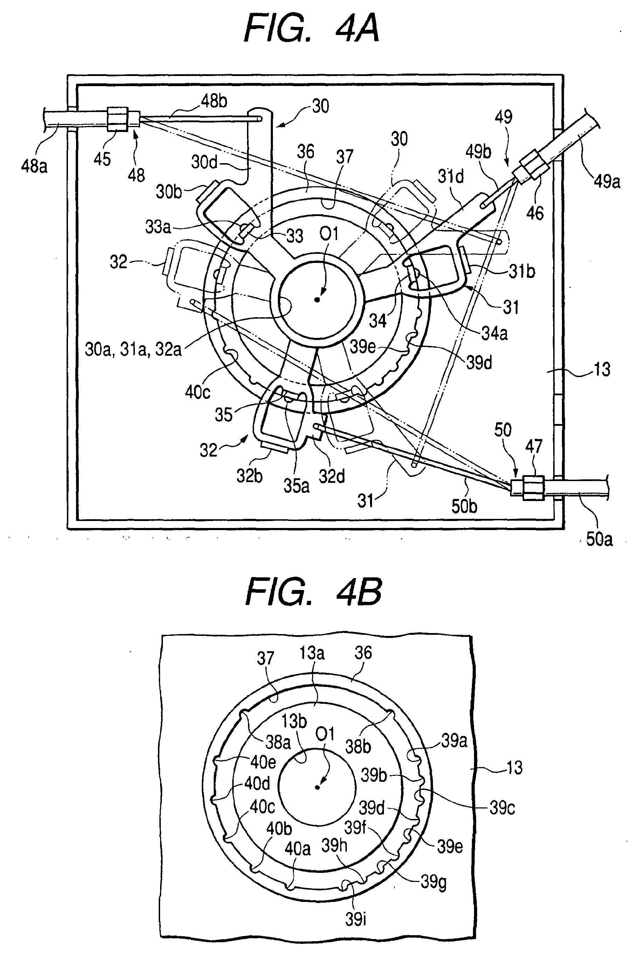

Further, as shown in FIGS. 1 and 4A, the turning levers 30 to 32 are prevented by guide holes 56 to 58 (to be described later) from over turning. Thus, each of the turning levers 30 to 32 can be turned in a corresponding one of a range extending from a nearly upper-leftward direction to a nearly upper-rightward direction, a range extending from a nearly upper-rightward direction to a nearly downward direction, and a range extending from a nearly downward direction to a nearly upper-leftward direction with respect to the shaft portion 17b of the turning element 17.

As shown in FIGS. 2 and 3, each of moderation piece fixing portions 30c, 31c, and 32c is formed by being rearwardly cut up and bent in such a manner as to provide a nearly U-shaped through hole in a middle portion (that is, a middle part between the base end portion and the tip end portion) of a corresponding one of the turning levers 30 to 32.

As shown in FIGS. 3 and 4A, an end portion of each of moderation pieces 33, 34, and 35 serving as first moderation members made of an elastic metal is fixed to a corresponding one of the moderation piece fixing portions 30c to 32c. Each of semispherical projection portions 33a, 34a, and 35a pushed out radially from the shaft center O1 of the turning element 17 is formed in the vicinity of a corresponding one of the moderation pieces 33 to 35. The projection portions 33a to 35a are pressure-contacted with a moderation surface 37 (to be described later) by being pushed by the moderation pieces 33 to 35 each put in a cantilever-like state.

Further, each of cable attaching portions 30d, 31d, and 32d is provided in a corresponding one of the turning levers 30 to 32.
Meanwhile, a cylindrical moderation surface forming portion 36, whose shaft center is that O1, is formed on an outer peripheral part of the accommodating portion 13a of the case body 13 in such away as to project frontwardly. Incidentally, the moderation surface forming portion 36 corresponds to the first moderation surface member. The first moderation mechanism is constituted by the moderation pieces 33 to 35 and the moderation surface forming portion 36.

As shown in FIGS. 4A and 4B, the inner peripheral surface of the moderation surface forming portion 36 is set to be the moderation surface 37. Sixteen moderation concave portions 38a, 38b, 39a to 39i, and 40a to 40e are formed in the moderation surface portion 37. The moderation concave portion 38b is disposed at a upper-rightwardly place with respect to the shaft portion 17b of the turning element 17. Moderation concave portions 39a to 39i, 40a to 40e, and 38a are arranged in a clockwise direction from the moderation concave portion 38b in this order. The moderation concave portion 38a is provided at a upper-leftwardly place with respect to the shaft portion 17b.

The moderation concave portions 38a and 38b are adapted to be engaged with the projection portion 33a of the moderation piece 33. The moderation concave portions 39a to 39i are adapted to be engaged with the projection portion 34a of the moderation piece 34. The moderation concave portions 40a to 40e are adapted to be engaged with the projection portion 35a of the moderation piece 35.

Three cable holding portions 45, 46, and 47 are formed on the backward side wall of the case body 13 in such a manner as to frontwardly project therefrom. The cable holding portions 45 to 47 are disposed in the proximity of an leftwardly upward end portion, a rightwardly upward portion, and a rightwardly downward portion of the backward side wall of the case body 13, respectively, each of which has a pair of holding pieces. Each of outer cables 48a, 49a, and 50a of the cables 48, 49, and 50 is attached and fixed to a corresponding one of the cable holding portions 45 to 47 by the corresponding pair of holding pieces.

Each of the cables 48 to 50 includes a corresponding one of the outer cables 48a to 50a, and a corresponding one of inner cables 48b, 49b, and 50b, which is passed through the corresponding one of the outer cables 48a to 50a. Tip end portions of the inner cables 48b to 50b are turnably connected to the cable attaching portions 30d to 32d of the turning levers 30 to 32, respectively. Further, each of the inner cables 48b to 50b is adapted to slide in a corresponding one of the outer cables 48a to 50a according to a turn amount of the corresponding one of the turning levers 30 to 32.

As illustrated in FIGS. 1 and 2, the decorative panel 12 is fixed to the front of the case body 13. The decorative panel 12 is formed so that an upper portion thereof is longer than the outward shape of the case body 13. A turning knob mounting hole 55, the guide holes 56, 57, and 58, and a switch attaching hole 59 are provided on the decorative panel 12.

In a part of the upper part of the decorative panel 12, which does not face the case body 13, the switch attaching hole 59 is formed so as to laterally extends. A switch box 14 fixed to the upper portion of the case body 13 is placed on the backward side of the switch attaching hole 59. Three pressing switches 14a to 14c are provided at a front side portion of the switch box 14. The pressing switches 14a to 14c are passed through the switch attaching hole 59 from rear to front.

The turning knob mounting hole 55 and the guide holes 56 to 58 are provided at a portion facing the case body 13, that is, in a nearly square space of the decorative surface 12a of the decorative panel 12. The turning knob mounting hole 55 is a circular hole so that the center of this hole coincides with the shaft center O1 of the turning element 17.

Meanwhile, as illustrated in FIGS. 2 and 3, in the shaft portion 17b of the turning element 17, the diameter of a part located at a frontward side of the locking claw 17e is small , as compared with that of a part located at a backward side thereof, and formed like a quadrangular prism. Hereinafter, this quadrangular-prism-like portion is referred to as a turning knob mounting portion 17f. A turning knob 60 is fixed to the turning knob mounting portion 17f. The turning knob 60 is placed in such a way as to protrude from the decorative panel 12a. The turning knob 60 corresponds to the changing operation member for changing an air volume, by performing a rotating operation.

As shown in FIG. 1, the turning knob 60 is enabled to perform a turning operation in such a way as to selectively designate an OFF-position 60a, and a first air-volume position 60b to a fourth air-volume position 60e provided on the decorative surface 12a of the decorative panel 12.

The guide holes 56 to 58 are formed in such a manner as to be placed along the same virtual circle E to be drawn around the shaft center O1. The guide holes 56 to 58 are formed along the same virtual circle E in a portion extending from a nearly upper-leftwardly part to a nearly upper-rightwardly part, and a portion extending from a nearly upper-leftwardly part to a nearly downward part, and a part extending from a nearly downward part to a nearly upper-leftwardly part, respectively. Tip end parts of the knob mounting portions 30b to 32b are respectively passed through the guide holes 56 to 58 from rear to front (incidentally, FIG. 3 shows only the knob mounting portion 32b). Sliding knobs 61 to 63 are respectively fixed to these tip end parts.

The sliding knobs 61 to 63 respectively correspond to the changing operation member for changing a choice of whether to take outside air into the vehicle, the changing operation member for changing temperature, and the changing operation member for changing a wind supply opening. Moreover, all the three sliding knobs 61 to 63 correspond to the changing operation member enabled to perform a sliding operation.

The sliding knob 61 is enabled to perform a sliding operation in such a way as to selectively designate an air circulation position 61a, and an outside air intake position 61b provided on the decorative surface 12a of the decorative panel 12. The sliding knob 62 is enabled to perform a sliding operation in such a way as to selectively designate a first temperature position 62a to a ninth temperature position 62i provided on the decorative surface 12a. The sliding knob 63 is enabled to perform a sliding operation in such a way as to selectively designate a first wind supply position 63a to a fifth wind supply 63e provided on the decorative surface 12a.

Next, the operation relation among other members at the time of operating the turning knob 60 is described hereunder.
As shown in FIGS. 1, 2, 5, and 6, when the turning knob 60 is turned, the turning element 7 turns with the turn of the turning knob 60. At this time, in the case that the turning knob 60 indicates the OFF-position 60a, the moderation ball 20 engages with the moderation concave portion 22a. The sliding electrode 19 is placed at a position of the sliding electrode 19, which is represented by a two-dot chain line in FIG. 6.

When the turning knob 60 indicates one of the first to fourth air volume positions 60b to 60e, the moderation ball 20 engages with the corresponding one of the moderation concave portions 22b to 22e. In this time, the sliding electrode 19 abuts against the common electrode 16e at all times, so that the common electrode 16e is electrically connected to each of the stationary electrodes 16a to 16d through the sliding electrode 19. Therefore, an electrical signal is outputted to another device (not shown) other than the controller unit 11. Operations corresponding to the first to fourth air volume positions 60b to 60e are performed.

Next, the operation relation among other members at the time of operating the sliding knob 61 is described hereunder.
As shown in FIGS. 1, 4A, and 4B, when the sliding knob 61 is moved by sliding, the turning lever 30 turns around the shaft center O1. At this time, in the case that the sliding knob 61 indicates the air circulation position 61a, the projection portion 33a of the moderation piece 33 engages with the moderation concave portion 38a of the moderation surface 37. The movement length of the inner cable 48b of the cable 48 is set at a predetermined length according to the position of the turning lever 30 at that time. When the sliding knob 61 indicates the outside air intake position 61b, the projection portion 33a of the moderation piece 33 engages with the moderation concave portion 38b of the moderation surface 37. The movement length of the inner cable 48b of the cable 48 is set at a predetermined length according to the position of the turning lever 30 at that time.

Therefore, the movement length of the inner cable 48b, which is set according to the sliding position of the sliding knob 61, is mechanically transmitted to devices (not shown) other than the controller unit 11. Then, operations corresponding to the air circulation position 61a and the outside air intake position 61b are performed.

Next, the operation relation among other members at the time of operating the sliding knob 62 is described hereunder.

As shown in FIGS. 1, 4A, and 4B, when the sliding knob 62 is moved by sliding, the turning lever 31 turns around the shaft center O1. At this time, in the case that the sliding knob 62 indicates one of the first to ninth temperature positions 62a to 62i, the projection portion 34a of the moderation piece 34 engages with a corresponding one of the moderation concave portions 39a to 39i of the moderation surface 37. The movement length of the inner cable 49b of the cable 49 is set at a predetermined length according to the position of the turning lever 31 at that time.

Thus, the movement length of the inner cable 49b, which is set according to the sliding position of the sliding knob 62, is mechanically transmitted to devices (not shown) other than the controller unit 11. Then, operations corresponding to the first to ninth temperature positions 62a to 62i are performed.

Next, the operation relation among other members at the time of operating the sliding knob 63 is described hereunder.

As shown in FIGS. 1, 4A, and 4B, when the sliding knob 63 is moved by sliding, the turning lever 32 turns around the shaft center O1. At this time, in the case that the sliding knob 63 indicates one of the first to fifth wind supply positions 63a to 63e, the projection portion 35a of the moderation piece 35 engages with a corresponding one of the moderation concave portions 40a to 40e of the moderation surface 37. The movement length of the inner cable 50b of the cable 50 is set at a predetermined length according to the position of the turning lever 32 at that time.

Accordingly, the movement length of the inner cable 50b, which is set according to the sliding position of the sliding knob 63, is mechanically transmitted to devices (not shown) other than the controller unit 11. Then, operations corresponding to the first to fifth wind supply positions 63a to 63e are performed.

Next, effects of the controller unit 11 of this embodiment are described hereinbelow.
(1) According to the controller unit 11 in this embodiment, the sliding knobs 61 to 63 are placed on the same virtual circle E (to be drawn around the shaft center O1) in the decorative surface 12a of the decorative panel 12 in such a manner as to be able to move by sliding. Therefore, as compared with, for example, the conventional controller unit in which the three sliding knobs and the turning knob are separately placed in the decorative surface, the controller unit 11 reduces the space, on which the changing operation members are disposed, in the decorative surface 12a. Consequently, the size of the controller unit 11 is made to be small, in comparison with that of the conventional controller unit.
   Moreover, the sliding knobs 61 to 63 are disposed on the same virtual circle to be drawn around the turning knob 60. Thus, the appearance of the controller unit is beautiful.
   Additionally, the pattern of the turning knob 60 and the sliding knobs 61 to 63 achieves very efficient placement thereof in the case that the decorative surface 12a, on which the four knobs are placed, is nearly square.
(2) The controller unit 11 in this embodiment is configured so that the three moderation pieces 33 to 35 are pressure-contacted with the single moderation surface 37. Consequently, the three sliding knobs 61 to 63 are enabled to provide a feeling of moderation. Meanwhile, in the conventional controller unit 181, each of the sliding knob mechanisms 182 to 185 has the pair of moderation members (not shown) and the moderation surface member (not shown). Conversely, in the case of the controller unit 11, there is no necessity for providing a moderation surface member corresponding to each of the moderation members, which would be provided independent of other moderation surface members in the conventional controller unit 181. Consequently, the configuration of the controller unit 11 is simplified.
(3) In the controller unit 11 in this embodiment, the turning knob 60 and the sliding knobs 61 to 63 are placed around the shaft center O1 in such a manner as to be able to perform a turning operation or a sliding operation. Therefore, even when each of the turning knob 60 and the sliding knobs 61 to 63 is operated, the distance between the center O1 and each of the knobs 60 to 63 does not change (see FIG. 1).

Therefore, the turning knob 60 and three of the sliding knobs 61 to 63 can be turned around the shaft center Ol or slid simultaneously in the same direction by one hand. Incidentally, the expression "same direction" used herein means a clockwise or counterclockwise direction around the shaft center O1.

For instance, the turning knob 60, the sliding knob 61, and the sliding knob 62 can be simultaneously operated in the same direction. Alternatively, the sliding knob 61, the sliding knob 62, and the sliding knob 63 can be simultaneously operated in the same direction.

### Second Embodiment

Hereinafter, a second embodiment embodying the invention will be described with reference to FIGS. 7 to 21.

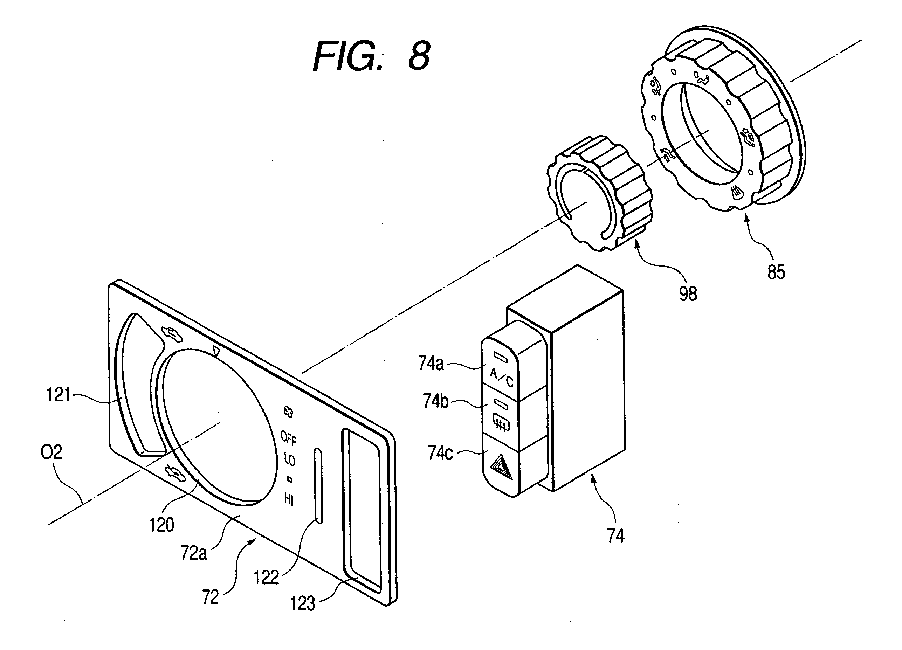

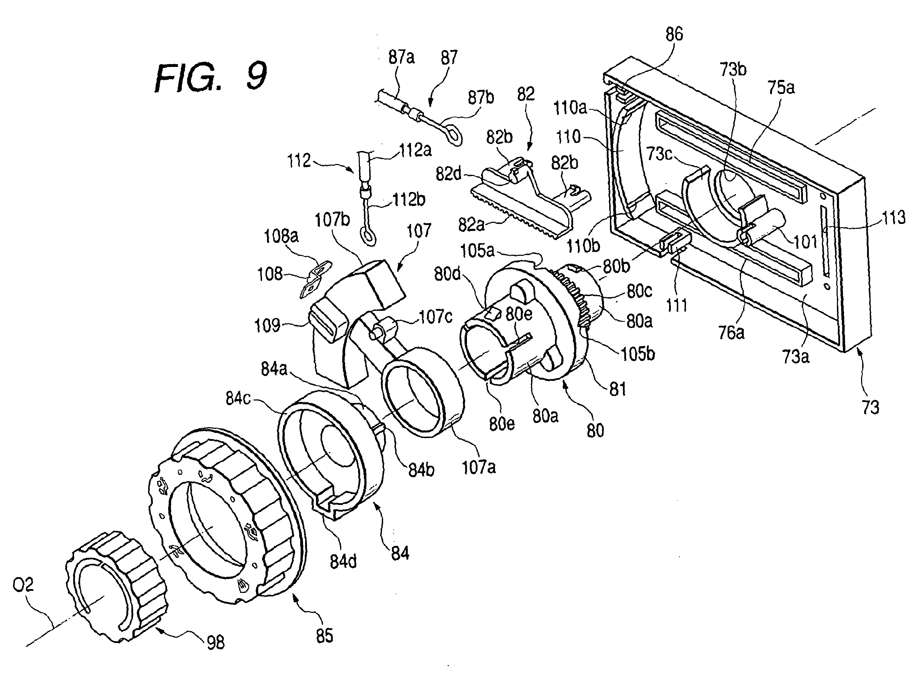

FIG. 7 shows a front face of an operation switch unit (hereunder referred to as a controller unit) 71 for a vehicle according to the invention. As shown in FIGS. 8 and 9, the controller unit 71 has a decorative panel 72, a case body 73, and a switch box 74.

The case body 73 is shaped nearly like a rectangular box, and opened in a front-side face portion thereof. The case body 73 is fixed to a stationary member (not shown) in an instrument panel (not shown) of a vehicle.

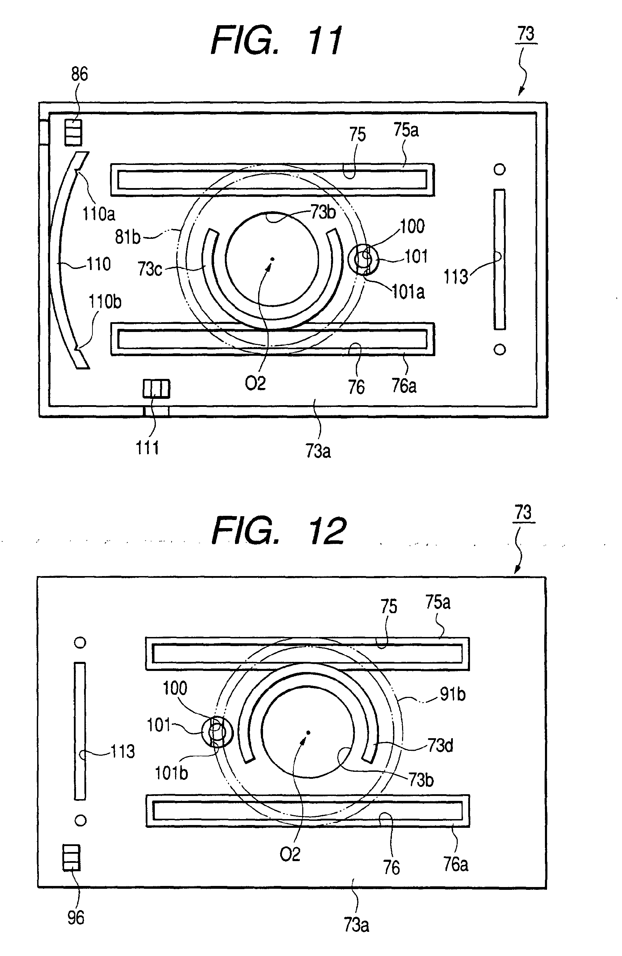

As shown in FIGS. 9 and 11, a circular through hole 73b is formed in the vicinity of the central part of the backward sidewall 73a of the case body 73. A pinion accommodating portion 73c having a C-shaped section is formed on the outer peripheral portion of the through hole 73b on the backward side wall 73a of the case body 73 in such a way as to project frontwardly. The peripheral wall of the pinion accommodating portion 73c is formed like a circular arc to be drawn around a shaft center O2, an upper portion of this peripheral wall thereof being opened. Incidentally, the shaft center O2 corresponds to the center of the turn shaft.

Rectangular laterally elongated holes 75 and 76 are formed in the backward side wall 73a of the case body 73 above and below the pinion accommodating portion 73c, respectively. Guides 75a and 76a each having a rectangular section are formed in the elongated holes 75 and 76, respectively. The guides 75a and 76a are formed on the backward side wall 73a in such a way as to frontwardly and backwardly project therefrom.

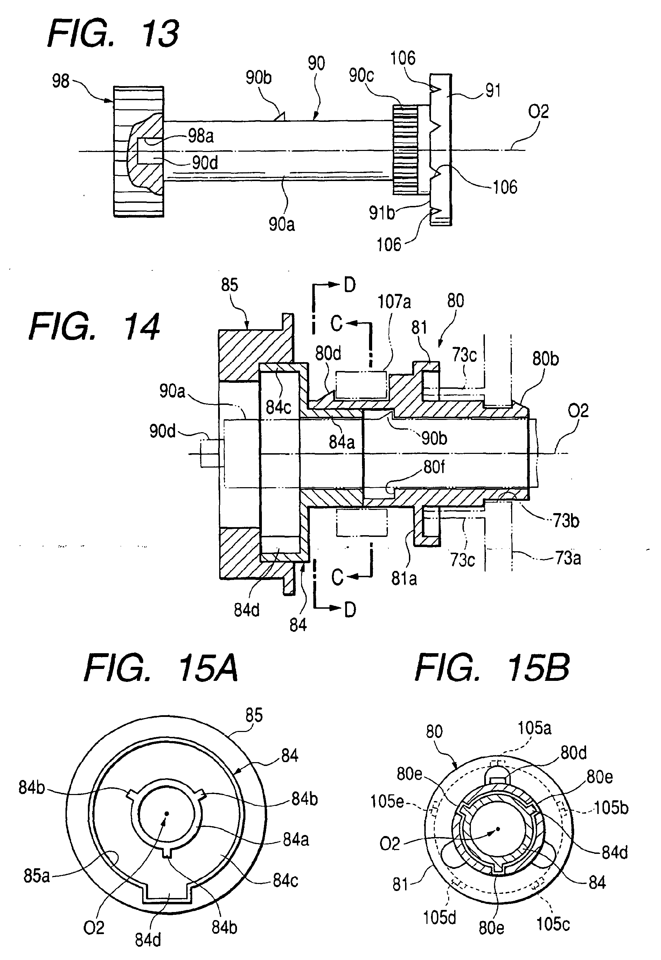

As shown in FIG. 14, a tip end portion of a turning element 80 having a cylindrical portion 80a is turnably passed through the through hole 73b from front. A locking claw 80b is formed on the outer peripheral portion of the turning element 80. The locking claw 80b is engaged with the opening edge portion of the through hole 73b. Although the turning element 80 can be turned with respect to the case body 73, the movement of the turning element 80 toward the shaft center 02 is prevented by the engagement between the locking claw 80b and the opening edge portion of the through hole 73b, and the abutment of an end surface of the pinion accommodating portion 73c against the flange portion 81a.

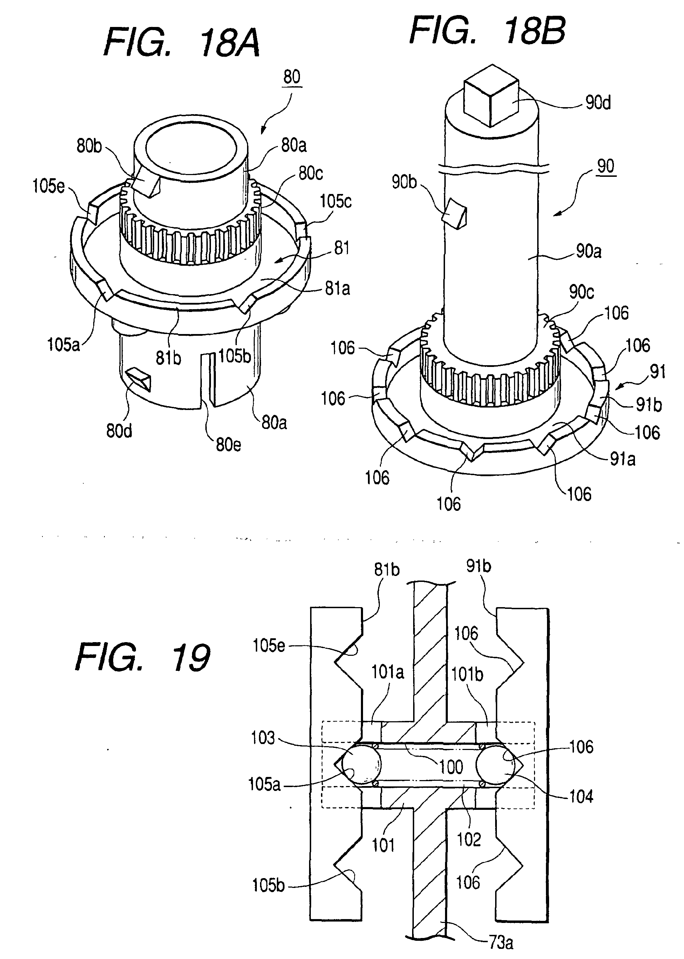

As shown in FIGS. 14 and 18A, the pinion portion 80c serving as a pinion is formed over the entire periphery of the outer peripheral portion of the turning element 80.

A crown-gear-like moderation surface portion 81 is formed adjacently to and in front of the pinion portion 80c on the peripheral portion of the turning element 80. The moderation surface portion 81 includes a flange portion 81a which abuts against the tip end surface of the pinion accommodating portion 73c, and a moderation surface 81b. The turning element 80 including the moderation surface 81b corresponds to the second moderation surface member. This moderation surface 81b is formed on the outer periphery of and on the backward side surface of the flange portion 81a. Incidentally, the moderation surface 81b is described in detail later.

A locking claw 80d is formed on the outer peripheral portion of and in the vicinity of the front end of the turning element 80. As illustrated in FIGS. 15B and 18, three engaging grooves 80e are formed at angular uniform intervals along the circumferential direction at the front end portion of the turning element 80.

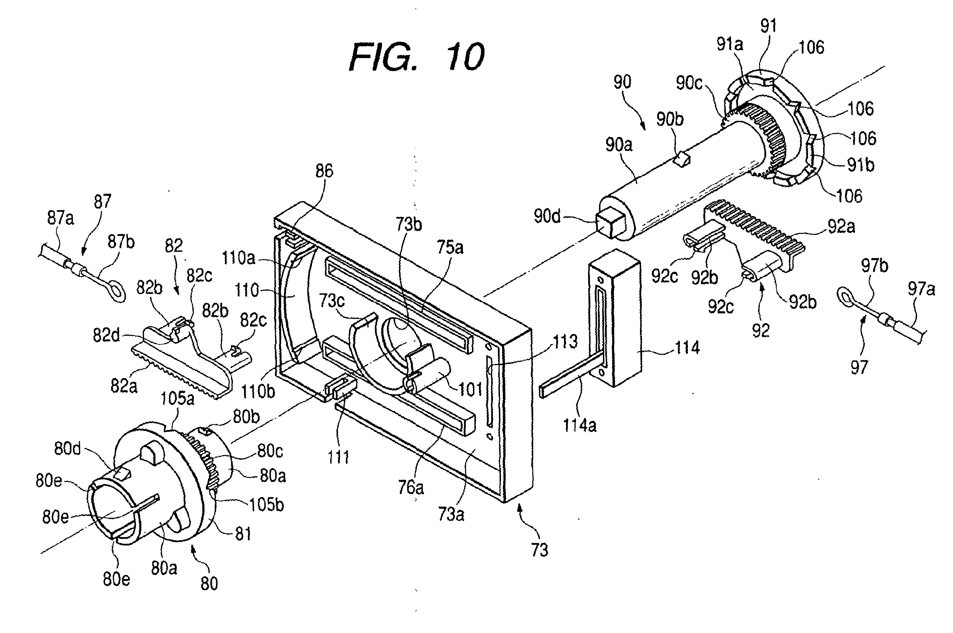

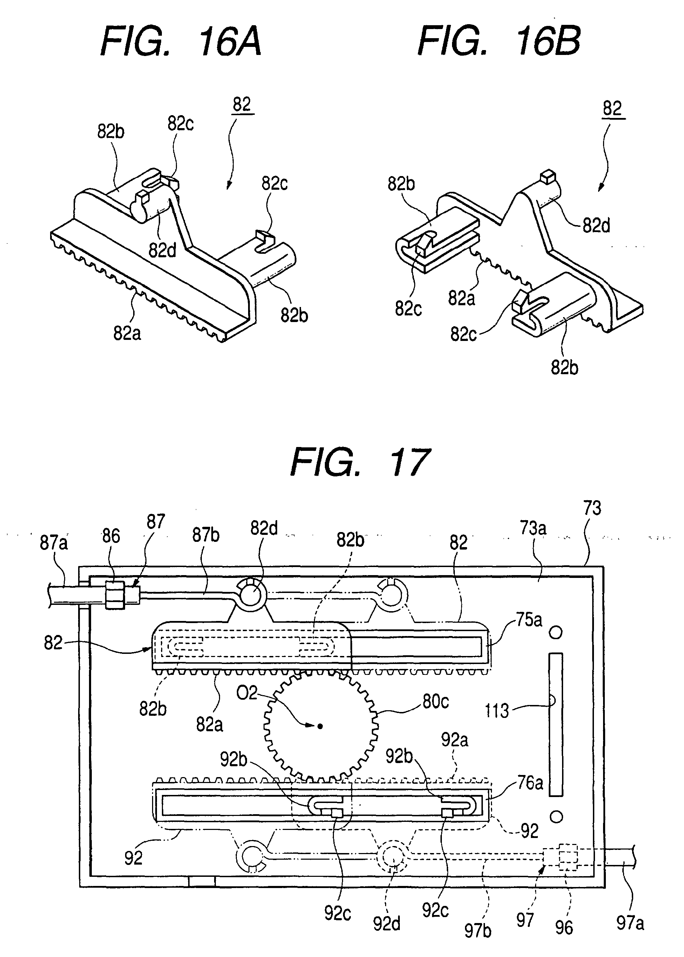

As shown in FIGS. 10, 16A, 16B and 17, a reciprocating element 82 including a rack portion 82a provided on the bottom surface thereof is provided above the turning element 80. The rack portion 82 corresponds to the rack. Guided portions 82b provided on both the left-hand side and the right-hand side thereof in such a way as to project backwardly is formed on the backward side surface of the reciprocating element 82. As shown in FIG. 17, the reciprocating element 82 is inserted into a guide cylinder 75a through both the guided portions 82b. A locking claw 82c is formed at each of the end part of the guided portions 82c. The locking claws 82c are engaged with the end portion of the guide cylinder 75a. A rack portion 82a of the reciprocating element 82 meshes with the pinion portion 80c of the turning element 80 through the upper opening part of the pinion accommodating portion 73c. When the turning element 80 performs forward and reverse turns around the shaft center 02, the reciprocating element 82 performs a linear reciprocating motion along the guide cylinder 75a according to the forward and reverse turn. A cable attaching portion 82d is formed at the top portion of the reciprocating element 82 in such a way as to project frontwardly.

A cable holding portion 86 inccluding a pair of holding pieces is formed on a leftwardly upper part of the backward side wall 73a of the case body 73 in such a manner as to protrude frontwardly. The cable holding portion 86 attaches an outer cable 87a of a cable 87 to the case body 73 by holding the cable by the pair of holding pieces. An inner cable 87a is slidably disposed in the outer cable 87a. An end portion of the inner cable 87b is turnably connected to the cable attaching portion 82d of the reciprocating element 82. The inner cable 87b corresponds to the power transmission cable. The inner cable 87b is adapted to slide in the outer cable 87a according to the reciprocating-movement amount of the reciprocating element 82.

As shown in FIGS. 9 and 15A, a connection member 84 is provided in front of the turning element 80. A rear portion of the connection member 84 is formed as a cylindrical portion 84a. Three locking pieces 84b extending radially from the shaft center O2 are formed on the outer periphery of the rear end part of the cylindrical portion 84a in such a way as to project therefrom. As shown in FIG. 15B, the locking piece 84b is engaged with the engaging groove 80e of the turning element 80. The turning element 80 and the connection member 84 are formed in such a way as to turn around the shaft center O2 together with each other.

As shown in FIGS. 9 and 15A, a bottomed cylindrical tray portion 84c is formed at the front portion of the connection member 84. A circular through hole communicating with a hollow part of the cylindrical portion 84a is formed in the central part of the tray portion 84c. A part of the peripheral wall outwardly projects from the outer periphery of the tray portion 84c. The projecting part of the peripheral wall constitutes the locking portion 84d.

A nearly annular turning knob 85 is provided in front of the connection member 84. The turning knob 85 corresponds to the changing operation member for changing a wind supply opening, and to the changing operation member enabled to perform a turning operation, and to the first changing operation member.

An engaging concave portion 85a (see FIG. 15A) having an outward shape similar to that of the connection portion 84 is formed on the backward side surface of the turning knob 85. The tray portion 84c and the locking portion 84d of the connection member 84 are engaged with the engaging concave portion 85a. Thus, the turning knob 85 and the connection member 84 are formed in such a way as to turn around the shaft center 02 together with each other. The locking piece 84b is engaged with the engaging groove 80e of the turning element 80. The turning element 80 and the connection member 84 are formed in such a manner as to turn around the shaft center 02 together with each other.

As shown in FIG. 12, the pinion accommodating portion 73d having a C-shaped section is formed on the outer periphery of the through hole 73b in the backward side wall 73 of the case body 73 in such a way as to project backwardly. The peripheral wall of the pinion accommodating portion 73d is formed like a circular arc to be drawn around the shaft center 02, and is opened in the bottom portion of the peripheral wall.

As shown in FIGS. 13 and 14, a shaft portion 90a provided in the turning member 90 is turnably inserted from rear into the cylindrical portion 80a of the turning element 80. A locking claw 90b is formed on the outer peripheral portion of a longitudinal middle part of the shaft portion 90a. The locking claw 90b is engaged with an engaging step portion 80f provided in the cylindrical portion 80a of the turning element 80. The turning member 90 is enabled to relatively turn with respect to the turning element 80 around the shaft center of the turning element 80.

In the turn member 90, a pinion portion 90c serving as the pinion is formed on the rear end part of the shaft portion 90a. The pinion portion 90c is accommodated in the pinion accommodating portion 73d of the case body 73.

As shown in FIGS. 13 and FIG. 18B, a crown-gear-like moderate surface portion 91 is formed on the backward end portion of the turning member 90. The moderation surface portion 91 includes a flange portion 91a which is adapted to abut against the end surface of the pinion accommodating portion 73d, and a moderation surface 91b positioned on an outer peripheral portion of the pinion accommodating portion 73d. The turning member 90 including the moderation surface 91b corresponds to the third moderation surface member.

The moderation surface 91b is formed on the outer peripheral part of the flange portion 91a. The moderation surface 91b and the moderation surface 81b are placed so that the inside and outside diameters of the former surface are equal to those of the latter one, respectively, and that these surfaces face each other across the backward side wall 73a. Incidentally, the details of the moderation surface 91b are described later. A quadrangular-prism-like connection portion 90d is formed at the front end part of the shaft portion 90a of the turning member 90.

As shown in FIGS. 9, 10, and 13, a substantially circular turning knob 98 is provided in front of the turning member 90. The turning knob 98 corresponds to the changing operation member for changing temperature, to the changing operation member enabled to perform a turning operation, and to the second changing operation member. An engaging concave portion 98a, whose outer shape is similar to that of the connection portion 90d of the turning member 90, is formed in the backward side surface of the turning knob 98. The connection portion 90d is engaged with the engaging concave portion 98a. Thus, both the turning knob 98 and the turning member 90 turn around the shaft center 02 together with each other. The turning knob 98 is placed in such a way as to protrude frontwardly from the front side surface of the turning knob 85.

As illustrated in FIGS. 10 and 17, a reciprocating element 92 is provided under the turning member 90. Incidentally, although this reciprocating element 92 is a member having the same shape as that of the reciprocating element 82, for convenience of description, reference character designating the reciprocating element of the second embodiment is altered from that designating the reciprocating element of the first embodiment. Therefore, the last significant digit of each of reference characters designating other parts of the reciprocating element 92 is common to that of each of reference characters designating other parts of the reciprocating element 82. Thus, reference numerals ranging from 90 to 99 are employed to designate other parts of the reciprocating element 92. Incidentally, when this reciprocating element 92 is attached to the controller unit 71, the rack portion 92a is positioned at an upper place in the reciprocating element 92. The guided portion 92b is disposed at a frontward place in the reciprocating element 92. The rack portion 92a corresponds to the rack.

Both the guided portions 92b are inserted into the guide cylinder 76a. Each of the locking claws 92c is engaged with an end portion of the guide cylinder 76a. The rack portion 92a of the reciprocating element 92 meshes with the pinion portion 90c of the turning member 90 through an opening provided in a lower part of the pinion accommodating portion 73d.

Incidentally, referring to FIG. 17, the rack portion 92a seems to mesh with the pinion portion 80c. However, in the second embodiment, the pinion portion 90c and the pinion portion 80c are of the same shape. That is, the pinion portion 90c is equal in diameter and the number of teeth to the pinion portion 80c. Therefore, the pinion portion 90c hides itself behind the pinion portion 80c, and the rack portion 92a does not mesh with the pinion portion 80c but meshes with the pinion portion 90c.

When the turning member 90 performs forward and reverse turns around the shaft center O2, the reciprocating element 92 performs linear reciprocating motions along the guide cylinder 76a according to the forward and reverse turns of the member 90.
As shown in FIGS. 12 and 17, a cable holding portion 96 is formed at a rightwardly downward place of the backward side wall 73a of the case body 73 in such a manner as to project backwardly. The outer cable 97a of the cable 97 is held by both the pair of held pieces of the cable holding portion 96. The inner cable 97b is slidably placed in the outer cable 97a. An end portion of the inner cable 97b is turnably connected to the cable attaching portion 92d of the reciprocating element 92. The inner cable 97b corresponds to the power transmission cable. The inner cable 97b is adapted to slide inside the outer cable 97a according to a reciprocating-movement amount of the reciprocating element 92.

As shown in FIGS. 11, 12, and 19, a cylindrical moderation accommodating portion 101 is formed in the vicinity of the right-hand side of the through hole 73b provided in the backward side wall 73a of the case body 73 in such a way as to frontwardly and backwardly project therefrom. A circular through hole 100 is formed through a moderation member accommodating portion 101.

Slits 101a and 101b are formed in both the frontward and backward end portions of the moderation member accommodating portion 101. The moderation surface 81b of the moderation surface portion 81 and the moderation surface 91b of the moderation surface portion 91 are movably engaged in these slits, respectively.

A spring 102 serving as a common pushing member is accommodated in the through hole 100 of the moderation member accommodating portion 101. A moderation ball 103 serving as a second moderation member, and another moderation ball 104 serving as a third moderation member are accommodated at the frontward and backward sides of the spring 102. The second moderation mechanism comprises the turning element 80 and the moderation ball 103. The third moderation mechanism comprises the turning member 90 and the moderation ball 104.

The moderation balls 103 and 104 are adapted to be pressure-contacted with the moderation surface 81b of the turning element 80 and the moderation surface 91b of the turning member 90 at all times by a spring 102, respectively. As shown in FIGS. 15B and 18A, five concave portions 105a, 105b, 105c, 105d and 105e are formed at uniform intervals in the moderation surface portion 81b of the turning element 80. The moderation concave portions 105a to 105 e are adapted to engage with the moderation ball 103. A plurality of moderation concave portions 106 are formed at uniform intervals in the moderation surface portion 91b of the turning member 90. The moderation concave portions 106 are adapted to be engaged with the moderation ball 104.

As shown in FIGS. 9, 11, and 20, a guide wall 110 extending along a circular arc, which is drawn around the shaft center O2, is formed at the left-hand end portion of the backward side wall 73a of the case body 73 in such a manner as to forwardly protrude therefrom. Each of moderation concave portions 110a and 110b is formed in the vicinity of a corresponding one of both the top and bottom ends of the guide wall 110.

Further, a substantially T-shaped swinging member 107 is provided on the outer peripheral part in the proximity of the front end of the cylindrical portion 80a of the turning element 80. A ring portion 107a is formed at the base end portion of the swinging member 107. This ring portion 107a is turnably and loosely fitted to the outer peripheral part of the cylindrical portion 80a (see FIGS. 9 and 14). The ring portion 107a causes the locking claw 80d to restrain the swinging member 107 from frontwardly and backwardly moving.

A circular-arc-like guided portion 107b is formed at a tip end portion of the swinging member 107. The guided portion 107b is adapted to come close to the guide wall 110 and swing.

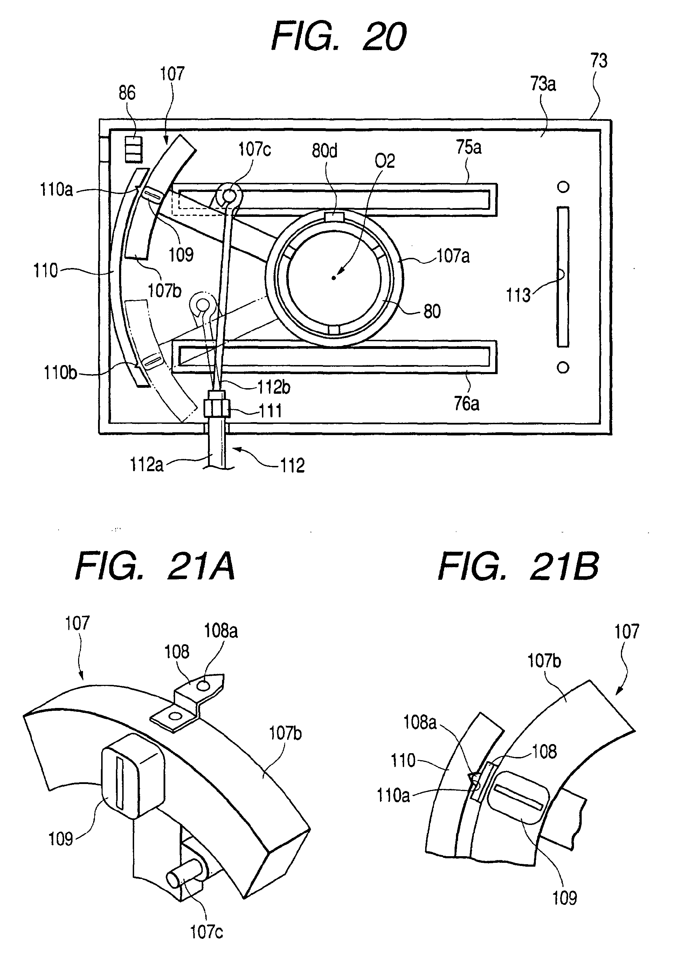

As illustrated in FIGS. 20, 21A, and 21B, a moderation piece 108 made of an elastic metal is fixed to an end surface of the guided portion 107b. A projection portion 108a is formed in the vicinity of the end portion of the moderation piece 108 in such a way as to project radially from the shaft center 02. The projection portion 108a is pressure-contacted with the guide wall 110 at all times by being pushed by the moderation piece 108 brought into a cantilever state. A swinging operation of the swinging member 107 causes the projection portion 108a to selectively engage with the moderation concave portions 110a and 110b.

Asliding knob 109 is formed on the front side surface of the guided portion 107b in such a way as to project therefrom. A cable attaching portion 107c is formed at a middle portion between the base end and the tip end of the swinging member 107. The sliding knob 109 corresponds to the changing operation member for changing a choice of whether to take outside air into the vehicle. The sliding knob 109 is enabled to perform a sliding operation along a circular arc to be drawn around the shaft center O2.

A cable holding portion 111 including a pair of holding pieces is formed in the vicinity of a leftwardly downward part of the backward side wall 73a of the case body 73 in such a manner as to frontwardly project, so that an outer cable 112a of the cable 112 is held by both the holding pieces of the cable holding portion 111. An inner cable 112b is slidably placed in the outer cable 112a. An end portion of the inner cable 112b is turnably connected to the cable attaching portion 107c of the swinging member 107. The inner cable 112b is adapted to slide inside the outer cable 112a according to a reciprocating-movement amount of the swinging member 107.

Meanwhile, as illustrated in FIG. 10, a slit 113 extending upwardly and downwardly is formed in the neighborhood of a right-hand side of the backward side wall 73a of the case body 73. A sliding lever box 114 is fixed to a part, at which the slit 113 is formed, of the backward side wall 73a from rear through a screw (not shown). The sliding lever box 114 has a lever portion 114a frontwardly projected through the slit 113. The lever portion 114a is enabled to upwardly and downwardly move by sliding.

As shown in FIGS. 8 and 9, the switch box 74 is fixed to a place at the right-hand side of the case body 73. Three switches 74a, 74b, and 74c are provided at the front-side portion of the switch box 74. The decorative panel 72 is fixed to the front-side portion of the case body 73. The decorative panel 72 is formed so that the right-hand side portion of the decorative panel 72 is longer than the outer shape of the case body 73.

As shown in FIG. 7, the turning knob mounting hole 120, the sliding knob mounting hole 121, the guide hole 122, and the switch attaching hole 123 are formed in the decorative panel 72.
The turning knob mounting hole 120 is a circular hole. The center of the hole 120 is made to coincide with the shaft center O2. An indication mark S is provided at an upper place on the outer peripheral portion of the turning knob mounting hole 120 with respect to the shaft center O2. The turning knob 85 and the turning knob 98 are provided in the turning knob mounting hole 120. The turning knob 85 and the turning knob 98 are placed in such a manner as to protrude from the decorative surface 72a of the decorative panel 72.

A first temperature range mark 128a, and a second temperature mark 128b are provided on the front side surface of the turning knob 98 in the circumferential direction. An end portion A in the counterclockwise direction of the first temperature range mark 128a is spaced apart from an end portion B in the clockwise direction of the first temperature range mark 128a, while an end portion C in the clockwise direction of the first temperature range mark 128a is brought close to an end portion D in the counterclockwise direction of the first temperature range mark 128a.

The turning knob 98 is enabled to turn in a range from a position, at which the indication mark S faces the first temperature range mark 128a, to a position, at which the indication mark S faces the second temperature range mark 128b. That is, a range, in which the guide cylinder 76a allows the guided portion 92b of the reciprocating element 92 to be guided is set as a range in which the turning knob 98 turns.

A first wind supply opening mark 124a to a fifth wind supply opening mark 124e are provided on the front side surface of the turning knob 85 in the circumferential direction at uniform intervals. The turning knob 85 is enabled to turn in a range from a position, at which the indication mark S faces the first wind supply opening mark 124a, to a position at which the indication mark S faces the fifth wind supply opening mark 124e. That is, the range, in which the guide cylinder 75a permits the guided portion 82b of the reciprocating element 82 to be guided, is set as a range in which the turning knob 85 turns.

The sliding knob mounting hole 121 formed like a circular arc to be drawn around the shaft center 02 is formed at the left-hand side of the turning knob mounting hole 120 in the decorative surface 72a of the decorative panel 72. The sliding knob 109 is placed in the sliding knob mounting hole 121. The sliding knob 109 is enabled to perform a sliding operation so as to selectively indicate an air circulation position 125a and an outside air intake position 125b, which are provided on the decorative surface72a of the decorative panel 72.

A guide hole 122 is formed along the upward or downward direction at the right-hand side of the turning knob mounting hole 120 in the decorative surface 72a of the decorative panel 72. A lever portion 114e of the sliding lever box 114 is passed through the guide hole 122 from rear to front. A sliding knob 126 serving as the changing operation for changing an air volume is fixed to a tip end portion of the lever portion 114a.

The sliding knob 126 is enabled to perform a sliding movement thereby to selectively indicate the OFF-position 127a, the first air volume position 127b to the third air volume position 127d, which are provided in the decorative surface 72a of the decorative panel 72.

A switch mounting hole 123 elongated in the upward or downward direction is formed in the proximity of the right-hand side end portion in the decorative surface 72a of the decorative panel 72. The pressing switches 74a to 74c of the switch box 74 are passed through the switch mounting hole 123 from rear to front.

Next, the operation relation among other members at the time of operating the turning knob 98 will be described hereunder.

When the turning knob 98 performs forward and reverse turns, the turning member 90 performs forward and reverse turns with the forward and reverse turns of the turning knob 98. Then, the moderation concave portion 106 of the moderation surface 91b of the turning member 90 is engaged with the moderation ball 104 when facing therewith. Thus, the turning knob 98 is enabled to provide a feeling of moderation.

When the turning member 90 performs forward and reverse turns, the reciprocating element 92 performs linear reciprocating motions in response to the forward and reverse motions of the turning member 90. When the end portion A of the first temperature range mark 128a of the turning knob 98 faces the indication mark S, the reciprocating element 92 is positioned at a place indicated by a two-dot chain line, as illustrated in FIG. 17. When the end portion B of the second temperature range mark 128b of the turning knob 98 faces the indication mark S, the reciprocating element 92 is positioned at a place indicated by a dashed line.

The movement length of the inner cable 97b of the cable 97 is set at a predetermined length according to the position in the lateral direction of the reciprocating element 92.
Thus, the movement length of the inner cable 97b according to the turning position of the turning knob 98 is mechanically transmitted to devices other than the controller unit 71 (not shown). Then, operations corresponding to the first temperature range mark 128a or the second temperature range mark 128b are performed.

Next, the operation relation among other members at the time of operating the turning knob 85 is described hereunder.

When the turning knob 85 performs forward and reverse turns, the turning element 80 performs forward and reverse turns with the forward and reverse turns of the turning knob 85. At that time, when one of the first wind supply opening mark 124a to the fifth wind supply opening mark 124e of the turning knob 85 faces the indication mark S, the corresponding one of the moderation concave portions 105a to 105e of the turning element 80 is engaged with the moderation ball 103 of the moderation member accommodating portion 101.

When the turning element 80 performs forward and reverse turns, the reciprocating element 82 performs linear reciprocating motions in response to the forward and reverse motions of the turning member 80. When the first wind supply opening mark 124a of the turning knob 85 faces the indication mark S, the reciprocating element 82 is positioned at a place indicated by a two-dot chain line, as illustrated in FIG. 17. When the fifth wind supply opening mark 124e of the turning knob 85 faces the indication mark S, the reciprocating element 82 is positioned at a place indicated by a solid line, as illustrated in FIG. 17.

The movement length of the inner cable 87b of the cable 87 is set at a predetermined length according to the position in the lateral direction of the reciprocating element 82.

Thus, the movement length of the inner cable 87b according to the turning position of the turning knob 85 is mechanically transmitted to devices other than the controller unit 71 (not shown) . Then, an operation corresponding to one of the first wind supply opening mark 124a to the fifth wind supply opening mark 124e is performed.

Next, the operation relation among other members at the time of operating the sliding knob 109 is described hereunder.

When the sliding knob 109 performs a sliding movement, the swinging member 107 turns around the shaft center 02. At that time, in the case that the sliding knob 109 indicates the air circulation position 125a, the projection 108a of the moderation piece 108 is engaged with the moderation concave portion 110a of the guide wall 110. The movement length of the inner cable 112b of the cable 112 is set at a predetermined length according to the position of the swinging member 107 at that time.

When the sliding knob 109indicates the outside air intake position 125b, the projection portion 108a of the moderation piece 108 is engaged with the moderation concave portion 110b of the guide wall 110. The movement length of the inner cable 112b of the cable 112 is set at a predetermined length according to the position of the swinging member 107 at that time.

Thus, the movement length of the inner cable 112b according to the sliding position of the sliding knob 109 is mechanically transmitted to devices (not shown) other than the controller unit 71. An operation corresponding to the air circulation position 125a or the outside air intake position 125b is performed.

Next, the operation relation among other members at the time of operating the sliding knob 126 is described hereunder.

The sliding knob 126 is enabled by the lever portion 114a guided by the guide hole 122 to perform a sliding movement in the upward and downward directions.

When the sliding knob 126 is placed at the OFF-position 127a, or the first air volume position 127b to the third air volume position 127d, the sliding lever box 114 outputs an electric signal corresponding to the position to another device (not shown) other than the controller unit 71.

Next, effects of the controller unit 71 according to the second embodiment are described hereinbelow.
(1) In the controller unit 71 in this embodiment, the sliding knob 109 is placed in such a way as to be able to slide along a circular arc to be drawn around the shaft center 02 (that is, around the turning knob 85 or 98) in the decorative surface 72a of the decorative panel 72.
   Therefore, as compared with the conventional controller unit, in which the sliding knob 109 is placed independent of the turning knobs 85 and 98, the controller unit 11 reduces the space, in which the knobs are placed, in the decorative surface 12a. Consequently, the size of the controller unit 11 is reduced, in comparison with the conventional controller unit. Moreover, the sliding knob 109 is placed in such a way as to be able to slide along a circular arc around the shaft center O2 of the turning knobs 85 and 98. Thus, the appearance of the controller unit 11 is beautiful.
(2) In the controller unit 71 in this embodiment, the turning knob 85 and the turning knob 98 are placed one upon another. Moreover, the shaft center of the turning knob 85 and that of the turning knob 98 are set to be the same shaft center 02. Therefore, as compared with the conventional controller unit in which the turning knob 98 are placed separately from each other, the controller unit 71 reduces the space, in which the knobs are placed, in the decorative surface 12a. Consequently, the size of the controller unit 11 is reduced, in comparison with the conventional controller unit.
(3) In the controller unit 71 in this embodiment, the moderation ball 103 and the moderation ball 104 are pressure-contacted with the moderation surface 81b and the moderation surface 81b, respectively, by a single common spring 102. Meanwhile, the conventional controller unit 181 is provided with a pushing member (not shown) for pushing a moderation member (not shown) against a moderation surface member (not shown) correspondingly to a pair of the moderation member (not shown) against the moderation surface member (not shown). Thus, the controller unit 71 reduces the number of parts (by one corresponding to the spring 102), as compared with the conventional controller unit 181.
(4) The controller unit 71 in this embodiment is adapted so that when the turning knob 85 performs forward and reverse turns, the pinion portion 80c similarly performs forward and reverse turns, and that such forward and reverse turns of the pinion portion 80c cause the reciprocating element 82 to perform linearly reciprocating motions. Moreover, the controller unit 71 of this embodiment is adapted so that when the turning knob 98 performs forward and reverse turns, the pinion portion 90c similarly performs forward and reverse turns, and that such forward and reverse turns of the pinion portion 90c cause the reciprocating element 92 to perform linearly reciprocating motions. Thus, the inner cables 87b and 97b respectively connected to the reciprocating elements 82 and 92 rectilinearly move.

In the case of the conventional controller unit 191, when the turning knobs 193c to 195c are caused to perform forward and reverse turns, the power conversion members 193c to 195c perform reciprocatingly swing along a circular arc. Thus, it is difficult to accurately transmit the turning motions of the turning knobs 193a to 195a to the power transmission cables 193e to 195e respectively connected to the power conversion members 193c to 195c.

In the case of using the controller unit 71 in the second embodiment, because the reciprocating elements 82 and 92 perform rectilinearly reciprocating motions, the turning motions of the turning knobs 85 and 98 are accurately transmitted to the inner cables 87b and 97b, as compared with the case of using the conventional controller unit 191.

### Other Embodiments

The aforementioned embodiments may be modified as the following additional embodiments.

Although the moderation pieces 33 to 35 are employed as the first moderation member in the first embodiment, the moderation ball or the moderation pins pushed by a pushing member, such as a spring, may be employed.

Although the moderation pieces 33 to 35 are made of an elastic metal in the first embodiment, the moderation pieces may be made of any other elastic material, such as a synthetic resin.

Although sixteen moderation concave portions 38a, 38b, 39a to 39i, and 40a to 40e are formed in the moderation surface 37 of the moderation surface forming portion 36 in the first embodiment, an arbitrary number of moderation concave portions may be formed therein.

Although the three sliding knobs 61 to 63 are provided in the first embodiment in such a way as to be able to perform a sliding movement on the same virtual circle E to be drawn around the shaft center O1, sliding knobs according to the invention are not limited thereto . Two or four or more sliding knobs enabled to perform a sliding movement on the same virtual circle E drawn around the shaft center E may be provided.

In the first embodiment, the turning knob 60 is used as the changing operation member for changing the air volume. Further, the sliding knob 61 is used as the changing operation member for changing a choice of whether to take outside air into the vehicle . Moreover, the sliding knob 62 is used as the changing operation member for changing temperature. Furthermore, the sliding knob 63 is used as the changing operation member for changing the wind supply opening. However, the changing operation members of the invention are not limited thereto. The combination of the turning knob 60 and the sliding knobs 61 to 63 may be used in the controller unit so that the knobs are assigned to the changing operation members selected from the changing operation member for changing temperature, the changing operation member for changing the air volume, the changing operation member for changing the wind supply opening, and the changing operation member for changing a choice of whether to take outside air into the vehicle.

Although the moderation balls 103 and 104 are employed as the second and third moderation members in the second embodiment, the moderation members of the invention are not limited thereto. Moderation pins may be employed as the second and third moderation members.

Although the spring 102 is employed as the pushing member in the second embodiment, the pushing member of the invention is not limited thereto. Rubber or an elastic material may be employed as the material of the pushing member. In short, any material may be employed as the material of the pushing member as long as the pushing member made of the material can pressure-contact the moderation balls 103 and 104 with the moderation surfaces 81b and 91b.

In the second embodiment, the turning knob 85 is used as the changing operation member for changing the wind supply opening. Further, the turning knob 98 is used as the changing operation member for changing temperature. Moreover, the sliding knob 109 is used as the changing operation member for changing a choice of whether to take outside air into the vehicle. Furthermore, the sliding knob 126 is used as the changing operation member for changing the air volume. However, the changing operation members of the invention are not limited thereto. The combination of the turning knobs 85 and 98 and the sliding knobs 109 and 126 may be used in the controller unit so that the knobs are assigned to the changing operation members selected from the changing operation member for changing temperature, the changing operation member for changing the air volume, the changing operation member for changing the wind supply opening, and the changing operation member for changing a choice of whether to take outside air into the vehicle.

According to the invention, the space, on which the changing operation members are placed, is reduced, as compared with the case that the changing operation member enabled to perform a sliding operation is provided separately from the changing operation member enabled to perform a turning operation. Consequently, the size of the operation switch unit for a vehicle is decreased.

According to the invention, a plurality of changing operation members enabled to perform sliding operations are provided around the center of the turning shaft of the changing operation member enabled to perform a turning operation. Thus, the space, on which the changing operation members are placed, is reduced still more. Consequently, the size of the operation switch unit for a vehicle is decreased still more.

According to the invention, there is no need for providing the first moderation surface member independent of each of the first moderation members. The structure of the operation switch unit is simplified.
According to the fourth operation switch unit of the invention, the space, on which the changing operation members are placed, is reduced still more. Consequently, the size of the operation switch unit for a vehicle is decreased still more.

According to the invention, the number of parts of the operation switch unit for a vehicle is reduced.
According to the sixth operation switch unit of the invention, the rack performs a linearly reciprocating motion. Thus, as compared with the case that the rack performs a reciprocating motion along a circular arc, a turning motion of the changing operation member enabled to perform a turning operation is accurately transmitted to the power transmission cable.

## Claims

1. An operation switch unit for vehicle comprising:
an unit body;
a turnable changing operation member provided to the unit body so as to be able to perform a turning operation; and
a slidable changing operation member provided to the unit body so as to be able to perform a sliding operation,
wherein the slidable changing operation member is placed so as to be able to perform the sliding operation along a circular arc around a center of a turn shaft of the turnable changing operation member provided.

2. The operation switch unit according to claim 1, wherein
a plurality of the slidable changing operation members are provided to the unit body, respectively, and
the plurality of the slidable changing operation members are placed on a same virtual circle to be drawn around the center of the turn shaft of the turnable changing operation member so as to be able to perform the sliding operation.

3. The operation switch unit according to claim 2, wherein
the plurality of the slidable changing operation members includes a first moderation mechanism for providing a feeling of moderation,
the first moderation mechanism includes first moderation members provided to the plurality of the slidable changing operation members, respectively, and a first moderation surface member with which the first moderation members is contacted, and
the first moderation surface member is placed on the virtual circle.

4. The operation switch unit according to any one of claims 1 to 3, wherein
a plurality of the turnable changing operation members are provided to the unit body, respectively,
centers of turn shafts of at least two of the plurality of the turnable changing operation members coincide with each other.

5. The operation switch unit according to claim 4, wherein
the plurality of the turnable changing operation members include a first changing operation member and a second changing operation member, a second moderation mechanism for providing a feeling of moderation to the first changing operation member, and a third moderation mechanism for providing a feeling of moderation to the second changing operation member,
the second moderation mechanism includes a second moderation surface member adapted to turn according to an amount of turn of the first changing operation member, and a second moderation member oppositely pressure-contacted with the second moderation surface member,
the third moderation mechanism includes a third moderation surface member adapted to turn according to an amount of turn of the second changing operating member, and a third moderation member oppositely pressure-contacted with the third moderation surface member, and
the second moderation member and the third moderation member are pressure-contacted with the second moderation surface member and the third moderation surface member by a common pushing member, respectively.

6. The operation switch unit according to any one of claims 1 to 5, further comprising:
a pinion adapted to turn according to an amount of turn of the turnable changing operation member;
a rack adapted to perform a reciprocating motion in response to forward and reverse turns of the pinion; and
a power transmission cable through which the reciprocating motion of the rack is transmitted,
wherein the rack performs a linearly reciprocating motion.

7. The operation switch unit according to any one of claims 1 to 6, wherein
the turnable changing operation member is one of a changing operation member for changing temperature, a changing operation member for changing an air volume, a changing operation member for changing a wind supply opening, and a changing operation member for taking outside air into the vehicle,
the slidable changing operation member is one of the changing operation member for changing temperature, the changing operation member for changing an air volume, the changing operation member for changing a wind supply opening, and the changing operation member for taking outside air into the vehicle, except one which the turnable changing operation member is.
